**Europäisches Patentamt**

**European Patent Office**

**Office européen des brevets**

(19)

(11) Veröffentlichungsnummer: **0 216 729**
**B1**

(12)

# EUROPÄISCHE PATENTSCHRIFT

(45) Veröffentlichungstag der Patentschrift:
24.10.90

(21) Anmeldenummer: **86810337.5**

(22) Anmeldetag: **25.07.86**

(51) Int. Cl.⁵: **B01D 46/24**, F01N 3/02

(54) Filterkerze zur Reinigung der Abgase von Dieselmotoren.

(30) Priorität: 16.08.85 CH 3535/85

(43) Veröffentlichungstag der Anmeldung:
01.04.87 Patentblatt 87/14

(45) Bekanntmachung des Hinweises auf die Patenterteilung:
24.10.90 Patentblatt 90/43

(84) Benannte Vertragsstaaten:
AT BE CH DE FR GB IT LI LU NL SE

(56) Entgegenhaltungen:
EP-A- 0 020 766
EP-A- 0 050 340
CH-A- 469 900
FR-A- 1 438 603
US-A- 4 264 346

(73) Patentinhaber: ALUSUISSE-LONZA SERVICES AG,
Feldeggstrasse 4, CH-8034 Zürich(CH)

(72) Erfinder: Mizrah, Tiberiu, Hohlenbaumstrasse 90,
CH-8200 Schaffhausen(CH)
Erfinder: Kampfer, Konrad, Neuhausweg 20,
CH-8240 Thayngen(CH)
Erfinder: Rieger, Wolfhart, zur Mühle, CH-8263 Buch(CH)

## Beschreibung

Die Rußbestandteile der Abgase von Dieselmotoren können grundsätzlich auf zwei Wegen verringert werden: durch Optimierung der Gemischaufbereitung und des Verbrennungsablaufs im Motor und durch Einbau von Filtern in den Abgasstrom. Je nach Ausbildung des Filters werden üblicherweise Rußabscheidungsgrade von 50–90% erzielt.

Das wirksame Filtervolumen kann jedoch nicht beliebig verändert werden, um eine optimale Rußabscheidung zu erreichen, denn das Filter wirkt als Widerstand, der einen Gegendruck gegenüber dem Abgas erzeugt. Der Gegendruck darf nicht zu hoch sein, da sonst die Motorleistung herabgesetzt und der Treibstoffverbrauch erhöht wird. Bei in Personenkraftwagen eingesetzten Dieselmotoren, die mit Abgasfiltern ausgerüstet sind, sollte der Gegendruck bei maximal 0.2 bar liegen.

Da das Dieselabgasrußfilter innerhalb kurzer Zeit des Gebrauchs bereits mit Ruß verstopft wäre, muß letzterer periodisch verbrannt werden. Die Zeitspanne von einer Regenerierungsphase zur anderen wird als Regenerierungsintervall bezeichnet. Unter bestimmten Fahrbedingungen regeneriert sich das Filter von selbst. Die Rußablagerungen werden dabei bei Temperaturen zwischen 550 und 700°C verbrannt. Dabei kann mit katalytisch beschichteten Filtern die Entzündungstemperatur auf ca. 400°C herabgesetzt werden.

Unregelmäßige Regenerierung kann zu unkontrollierter Verbrennung mit durch Hitzestau bewirkten wesentlich höheren Temperaturspitzen führen. Die während des Abbrands des Rußes im Filter entstehenden Temperaturspitzen gefolgt von Phasen des Abkühlens auf Abgastemperatur machen den Einsatz von Filtermaterialien notwendig, die gegenüber Thermoschock und hohen Temperaturen beständig sind.

Aus dem amerikanischen Patent 4 264 346 ist es bekannt, für obgenannte Zwecke eine offenporige Schaumkeramik in Form eines Vollzylinders aus Cordierit zu verwenden. Als offenporige Schaumkeramik wird dabei ein poröser Keramikkörper mit dreidimensionalem Netzwerk und zellularer Struktur, die eine Vielzahl von durchgehenden Hohlräumen enthält, verstanden. Der Keramikkörper wird derart in den Abgasstrom von Dieselmotoren gebracht, daß die Abgase denselben stirnseitig beaufschlagen und achsparallel (axial) durchströmen. Dabei ist die Rußabscheidung im anfänglich durchströmten Teil des Filters am größten und nimmt mit zunehmender Durchströmung schnell ab. Dies hat zur Folge, daß das Filter im zuerst angeströmten Bereich nach relativ kurzer Zeit seine Rußablagerungsaufnahmekapazität erreicht hat und regeneriert werden muß, der restliche Bereich des Filters jedoch noch rußaufnahmefähig ist, aber bereits ebenfalls dem Regenerierungsprozeß unterworfen wird.

In der EP-A 0 050 340 ist ebenfalls als Material für eine thermoschockempfindliche Filterkerze, welche unter anderem auch in hohlzylinderförmiger Ausbildung beschrieben ist, Cordierit offenbart.

Obwohl Cordieritkeramik als besonders temperaturwechselbeständig gilt, führt die Handhabung eines Filters der vorgeschriebenen Art wegen der häufigen Regenerierungsphasen zur relativ schnellen mechanischen Zerstörung des Filters.

Aufgabe der vorliegenden Erfindung ist es, die vorerwähnten Nachteile bei der Reinigung der Abgase von Dieselmotoren mit Filtern aus offenporiger Schaumkeramik zu beseitigen.

Zur Lösung der gestellten Aufgabe führt eine Filterkerze mit den Merkmalen des Anspruchs 1, insbesondere mit den Merkmalen des Anspruchs 2.

Weitere Vorteile und Einzelheiten der Erfindung ergeben sich anhand der Zeichnung und der nachfolgenden Ausführungsbeispiele.

Die Zeichnung zeigt schematisch in

Fig. 1 und 2 Filterkerzen in perspektivischer Darstellung,
Fig. 3 und 4 im Querschnitt den Einsatz der Filterkerzen nach den Figuren 1 und 2 in einer Abgasreinigungsvorrichtung und
Fig. 5 im Querschnitt den Einsatz einer weiteren Filterkerze in einer Abgasreinigungsvorrichtung.

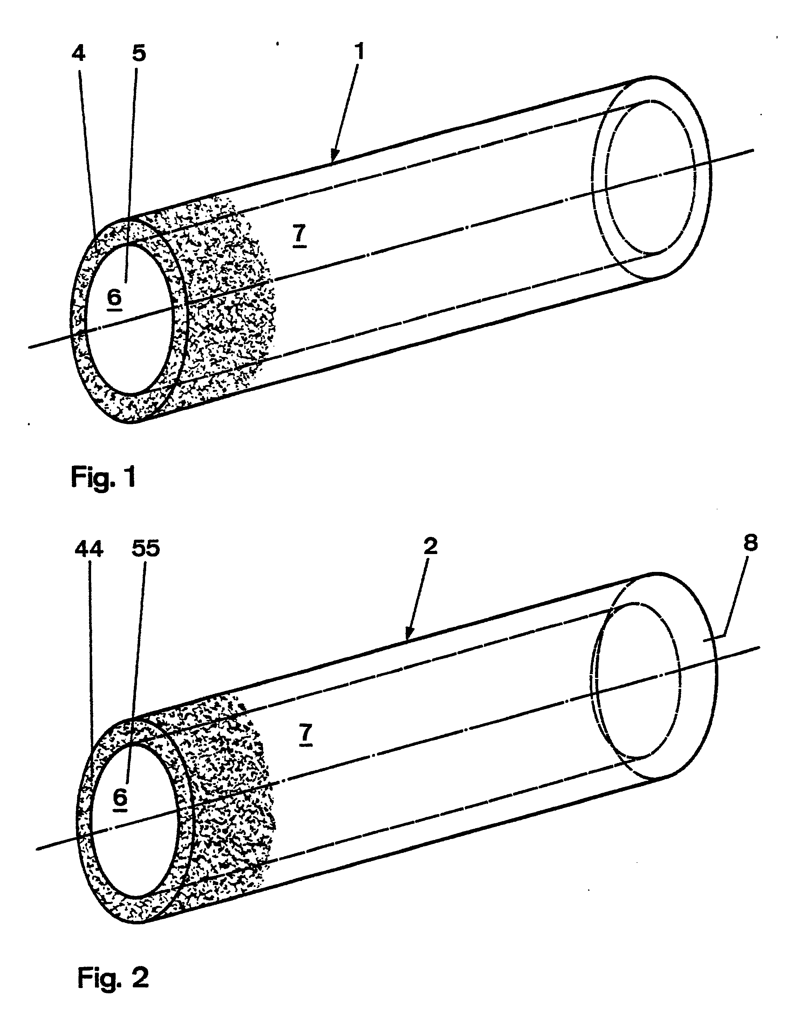

Figur 1 zeigt eine Filterkerze 1 aus offenporiger Schaumkeramik in Form eines Zylinders 4 mit durchgehender zylinderförmiger Öffnung 5. Die Oberflächenstruktur ist nur teilweise angedeutet. Die Achse der Öffnung 5 fällt mit der Achse des Zylinders 4 zusammen.

Figur 2 zeigt eine Filterkerze 2 aus offenporiger Schaumkeramik in Form eines Zylinders 44 mit zylinderförmiger Öffnung 55, deren Achse ebenfalls mit der Achse des Zylinders 44 zusammenfällt. Die Oberflächenstruktur ist nur teilweise angedeutet. Die Öffnung 55 ist jedoch nicht durchgehend, sondern durch einen Boden 8 am Zylinder 44 verschlossen. Der Boden 8 kann aus Schaumkeramik wie der Zylinder 44 oder aus einem dichten für die Abgase praktisch nicht durchgängigen Material bestehen. Zwischen Boden 8 und Wanddicke des Zylinders 44 besteht keine Abhängigkeit. Es ist jedoch zweckmäßig, im Fall, daß der Boden 8 ebenfalls aus offenporiger Schaumkeramik besteht, die Dicke des Bodens 8 etwa gleich stark wie die Wanddicke des Zylinders 44 zu wählen.

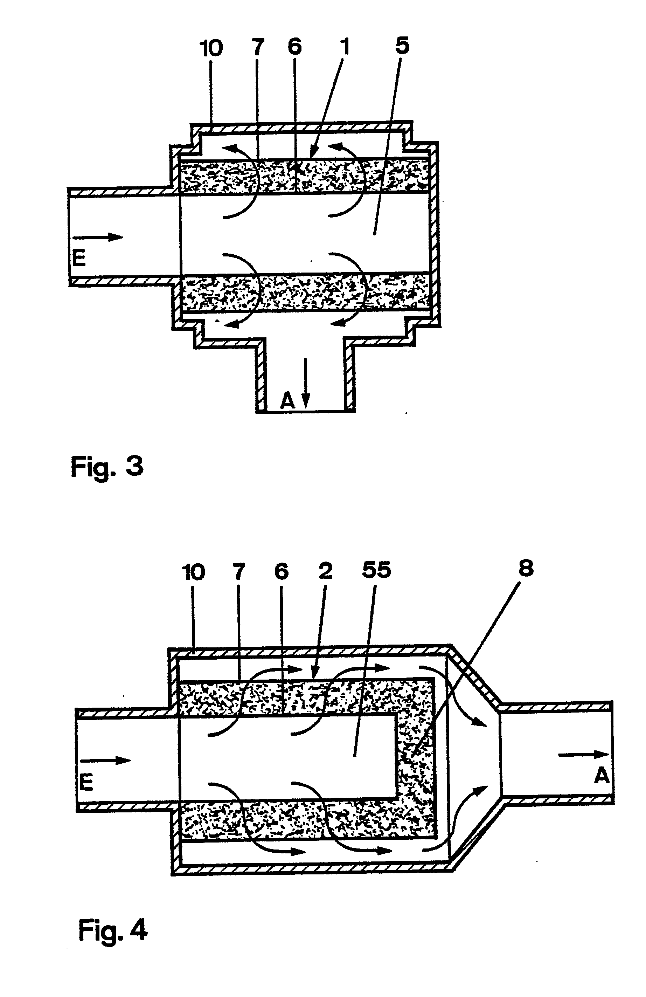

Die Figuren 3 und 4 zeigen beispielhaft, wie die Filterkerzen 1 bzw. 2 in eine Vorrichtung 10 zur Reinigung der Abgase von Dieselmotoren eingesetzt werden können. Der Verlauf der Gase ist durch Pfeile dargestellt. Die vom Dieselmotor kommenden Abgase treten durch den Einlaß E in die Vorrichtung 10 ein, gelangen in die Öffnung 5 bzw. 55 und durchströmen die Filterkerze 1 bzw. 2 nahezu auf dem kürzesten Weg, d.h. quer zur Längsachse, von der inneren Mantelfläche 6 zu äußeren Mantelfäche 7 und gegebenenfalls – je nach Ausführung des Bodens 8, ob für die Abgase durchlässig oder nicht – zum geringen Teil den Boden 8 der Filterkerze 2. Dabei ist der gesamte durchströmte Querschnitt der Filterkerze gleichmäßig filterwirksam. Die gereinigten Abgase verlassen die Vorrichtung 10 über den Auslaß A.

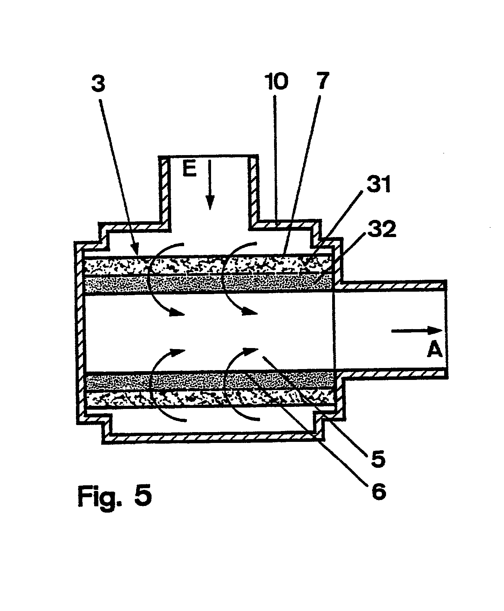

Figur 5 stellt eine ähnliche Anordnung wie Figur 3 dar. Jedoch treffen die von dem Motor kommenden verunreinigten Abgase über den Einlaß E der Abgasreinigungsvorrichtung 10 zunächst auf die Mantelfläche 7 der als Zylinder 4 ausgebildeten Filterkerze 3 mit durchgehender zylinderförmiger Öffnung 5, deren Achse mit der Achse des Zylinders 4 zusammenfällt, durchströmen die Filterkerze 3 in Richtung auf die innere Mantelfläche 6, gelangen in die Öffnung 5 und verlassen die Vorrichtung 10 über den Auslaß A. Die Filterkerze 3 besteht aus zwei zylindrischen innig miteinander verbundenen offenporigen Schaumkeramikschichten 31, 32, deren Achsen mit der Längsachse der Filterkerze 3 zusammenfallen. Die die äußere Mantelfläche bildende Schicht 31 hat eine Porosität von beispielsweise 50 Poren pro 2.54 cm (nachfolgend in Einklang mit der üblichen Terminologie als ppi – pores per inch – bezeichnet), die der Öffnung 5 zugewandte innere Schicht hat beispielsweise eine Porosität von 70 ppi. Durch eine derartige Filterkerze 3 mit in Durchströmungsrichtung zunehmender Anzahl ppi des Schaumkeramikkörpers werden im Gegensatz zu herkömmlichen Filtern aus offenporiger Schaumkeramik mit gleichmäßiger Porosität über den gesamten Querschnitt und gleichem Rußabscheidungsgrad niedrigere Gegendrücke erzielt, sofern die Beaufschlagung eines derartigen Mehrschichtfilters durch die ungereinigten Abgase von der Schaumkeramikschicht mit der gröberen Porosität her erfolgt.

Zur Herstellung der erfindungsgemäßen Filterkerzen mit gleichmäßiger Porosität wird ein offenporiger Kunststoffschaumstoff der geometrischen Ausgestaltung der gewünschten keramischen Filterkerzen unter Berücksichtigung des beim Brennen von keramischen Massen bekannten Schwundes mit einem Schlicker – einer wäßrigen Suspension eines Keramikpulvers mit einer Korngröße von kleiner 100 μm und einer mittleren Korngröße von etwa 7 μm – getränkt. Nach dem Trocknen des so imprägnierten Schaumstoffs, beispielsweise bei 100°C über 24 Stunden, wird dieser Grünkörper in einem vorzugsweise elektrisch beheizten Ofen bis zur Sintertemperatur der Keramik aufgeheizt und gebrannt. Bereits bei einer Temperatur von etwa 300°C verbrennt der Schaumstoff und hinterläßt so einen offenporigen Keramikschaum, der dann ein dreidimensionales Netzwerk mit zellularer Struktur, das eine Vielzahl von durchgehenden Hohlräumen enthält, bildet. Die Aufheizzeit auf Sintertemperatur von etwa 1200–1360°C beträgt etwa 24 Stunden. Die Haltezeit bei der Sintertemperatur liegt zwischen 2–10, vorzugsweise bei 6 Stunden. Der gebrannte offenporige Schaumkeramikkörper ist die einsatzfertige Filterkerze. Diese kann gegebenenfalls mit einer katalytisch wirkenden Beschichtung versehen werden.

Es ist nun gefunden worden, daß sich besonders thermoschockunempfindliche offenporige Schaumkeramik für die erfindungsgemäßen Filterkerzen aus einem Keramikpulver herstellen läßt, welches sich aus
68–94 Gew.-% Petalit,
1–5 Gew.-% Bentonit,
1–5 Gew.-% Kaolin und
0–30 Gew.-% Tonerde

zusammensetzt. Durch besonders hohe Thermoschockunempfindlichkeit und mechanische Abriebfestigkeit zeichnet sich ein Gemisch von
79 Gew.-% Petalit,
3 Gew.-% Bentonit,
3 Gew.-% Kaolin und
15 Gew.-% Tonerde
aus.

Die verwendeten Rohstoffe sind durch ihre Analysendaten wie folgt charakterisiert:
Petalit: $Li_2O$ 4 Gew.-%, $Al_2O_3$ 16 Gew.-%, $SiO_2$ 78 Gew.-%, Rest Verunreinigungen (Fe, Ca, Mg, Na, K);
Kaolin: $SiO_2$ 48 Gew.-%, $Al_2O_3$ 37 Gew.-%, Glühverlust 31.1 Gew.-%, Rest Verunreinigungen (Fe, Ti, Ca, Mg, K, Na);
Bentonit: $SiO_2$ 67 Gew.-%, $Al_2O_3$ 17 Gew.-%, $Fe_2O_3$ 2 Gew.-%, CaO 1 Gew.-%, MgO 3 Gew.-%, $Na_2O$ 4 Gew.-%, Glühverlust 6 Gew.-%;
Tonerde (Korund): $Al_2O_3$ 99.8 Gew.-%.

Zur Herstellung des Schlickers wurden die Rohstoffe in einer Kugelmühle mit Wasser im Verhältnis 3:1 unter Zugabe von Darvan Nr. 7® als Verflüssigungsmittel auf die vorher angeführte Korngröße heruntergemahlen und durch weitere Zugabe von Wasser, dem gegebenenfalls ein Mittel zur Erhöhung der Grünfestigkeit des ungebrannten Filterkörpers, z.B. Tylose, zugegeben werden kann, ein Schlicker mit einer solchen Viskosität hergestellt, daß dieser beim Imprägnieren den Kunststoffschaumstoff vollständig benetzt.

Beispiel 1

In bekannter Weise wurde ein Polyurethanschaum mit 35 ppi mit dreidimensionalem Netzwerk und zellularer Struktur mit durchgehenden Hohlräumen in Form eines Zylinders mit durchgehender Öffnung mit einem aus 68 Gew.-% Petalit, 25 Gew.-% Tonerde, 3 Gew.-% Bentonit und 4 Gew.-% Kaolin als Feststoffe bestehenden Schlicker getränkt und im Temperaturbereich von 1340°C ± 15°C 6 Stunden gesintert. Der Sinterkörper besteht aus einer offenporigen Schaumkeramik mit 40 ppi und stellt die erfindungsgemäße Filterkerze gemäß Figur 1 dar. Die Schaumkeramik hat einen Wärmeausdehnungskoeffizient von $2 \times 10^{-6}/°C$. Der Vorteil obgenannter Zusammensetzung der Feststoffbestandteile des Schlickers liegt insbesondere in der hohen mechanischen Festigkeit der daraus gefertigten Schaumkeramik und in dem breiten Sinterintervall bei der Herstellung derselben.

Röntgenografisch wurde gefunden, daß die gesinterte Schaumkeramik im wesentlichen aus Lithiumaluminiumsilikat (ASTM-Kartei 15–27) besteht und in untergeordneten Mengen Korund und Mullit enthält. Nach mikroskopischen Untersuchungen ist ein geringer Glasphasenanteil vorhanden. Die höhere mechanische Festigkeit wird dem Mullit zugeschrieben. Die geringe Sinterempfindlichkeit, die sich in Form des breiten Sinterintervalls ausdrückt, könnte auf den Glasphasenanteil zurückzuführen sein.

## Beispiel 2

In analoger Weise wie in Beispiel 1 wurde ein Polyurethanschaum mit 71 ppi in Form eines Hohlzylinders gemäß Figur 2 mit einem Schlicker, der 95 Gew.-% Petalit, 3 Gew.-% Tonerde, 1 Gew.-% Bentonit und 1 Gew.-% Kaolin als Feststoff enthielt, getränkt und getrocknet. Danach wurden durch mehrfaches Tauchen des Bodens in den Schlicker die Hohlräume des Polyurethanschaumbodens vollständig mit Feststoff des Schlickers gefüllt. Der Grünkörper wurde bei 1280°C 4 Stunden gesintert. Der Sinterkörper, bestehend aus offenporigem Schaumkeramikzylinder mit 80 ppi und dichtem Boden, stellt die erfindungsgemäße Filterkerze dar. Der Boden weist nach der Sinterung nur eine äußerst geringe. Gadurchlässigkeit auf, die durch das Ausbrennen des Polyurethanschaums bedingt ist.

Durch den gegenüber Beispiel 1 erhöhten Petalitgehalt des Schlickers resultiert eine offenporige Schaumkeramik mit einem Wärmeausdehnungskoeffizienten von $0.7 \times 10^{-6}/°C$, was eine hohe Temperaturwechselbeständigkeit des Materials zur Folge hat. Bei qualitativ gleicher Zusammensetzung wie in Beispiel 1 mit erwartungsgemäß deutlich höherem Anteil an Lithiumaluminiumsilikat ist die mechanische Festigkeit etwas geringer als in Beispiel 1. Auch muß die Sintertemperatur genauer eingehalten werden, da ansonsten Verformungen des Sinterkörpers festzustellen sind.

## Beispiel 3

Zu einem optimalen Verhältnis von Temperaturwechselbeständigkeit und mechanischer Festigkeit führte ein Schlicker mit 79 Gew.-% Petalit, 3 Gew.-% Bentonit, 3 Gew.-% Kaolin und 15 Gew.-% Tonerde als Feststoffe.

Ein Polyurethanschaum von 53 ppi in Form eines offenen Zylinders gemäß Figur 1 von 150 mm Länge, 140 mm Durchmesser und einer Wandstärke von 40 mm wurde mit einem derartigen Schlicker in bekannter Weise getränkt, getrocknet und bei einer Temperatur von 1300°C während 6 Stunden gebrannt. Der Sinterkörper besteht aus einer offenporigen Schaumkeramik mit 60 ppi und stellt die erfindungsgemäße Filterkerze dar.

Die Filterkerze wurde zur Reinigung der Abgase eines Dieselmotors in einer Vorrichtung und Anordnung, wie sie Figur 3 schematisch zeigt, eingesetzt. Es wurde ein Rußabscheidungsgrad von 80% erreicht. Die abgeschiedene Rußmenge ist entlang der gesamten quer zur Längsachse der Filterkerze, d.h. radial verlaufenden Strömungsrichtung praktisch konstant. Das Regenerierungsintervall bis zum Erreichen eines Gegendrucks von 0.2 bar betrug 1.2 Stunden.

Im Vergleich dazu wies ein bekanntes, aus offenporiger Schaumkeramik mit 60 ppi bestehendes Filter in Form eines Vollzylinders mit gleichen Außenabmessungen bei axialer Anströmrichtung der Abgase nur einen Abscheidungsgrad von 72% auf. Der anfängliche Gegendruck betrug 0.16 bar und das Regenerierungsintervall bis zum Erreichen eines Gegendrucks von 0.2 bar nur 15 Minuten. Die herkömmliche Filterkerze muß also bei schlechterer Reinigungswirkung 5 mal häufiger regeneriert werden als die erfinderische. Die Filterkerze wurde quer zur Längsrichtung in Scheiben zerschnitten. Diese zeigten in Durchströmungsrichtung abnehmende Gehalte an Rußablagerungen.

## Patentansprüche

1. Filterkerze aus thermoschockunempfindlicher, offenporiger Schaumkeramik in Form eines offenen oder einseitig geschlossenen Hohlzylinders zur Reinigung der Abgase von Dieselmotoren, dadurch gekennzeichnet, daß die Schaumkeramik vor dem Brand 68–95 Gew.-% Petalit, 1–5 Gew.-% Bentonit, 1–5 Gew.-% Kaolin und 0–30 Gew.-% Tonerde enthält.

2. Filterkerze nach Anspruch 1, dadurch gekennzeichnet, daß die Schaumkeramik vor dem Brand 79 Gew.-% Petalit, 3 Gew.-% Bentonit, 3 Gew.-% Kaolin und 15 Gew.-% Tonerde enthält.

## Claims

1. Filter plug of an open-pored foam ceramic material, insensitive to thermal shocks, in the form of a hollow cylinder, which is open or is closed on one side, for cleaning the exhaust gases from diesel engines, characterized in that the foam ceramic material contains, before firing, 68–95% by weight of petalite, 1–5% by weight of bentonite, 1–5% by weight of kaolin and 0–30% by weight of alumina.

2. Filter plug according to Claim 1, characterized in that the foam ceramic material contains, before firing, 79% by weight of petalite, 3% by weight of bentonite, 3% by weight of kaolin and 15% by weight of alumina.

## Revendications

1. Bougie filtrante en céramique alvéolaire à alvéoles ouverts, insensible au choc thermique, présentée sous la forme d'un cylindre creux ouvert fermé à une extrémité, pour l'épuration des gaz d'échappement des moteurs Diesel, caractérisée en ce que la céramique alvéolaire contient avant la cuisson 68 à 95% en poids de pétalite, 1 à 5% en poids de bentonite, 1 à 5% en poids de kaolin et 0 à 30% en poids d'alumine.

2. Bougie filtrante selon la revendication 1, caractérisée en ce que la céramique alvéolaire contient, avant la cuisson, 79% en poids de pétalite, 3% en poids de bentonite, 3% en poids de kaolin et 15% en poids d'alumine.

EP 0 216 729 B1

Fig. 1

Fig. 2

Fig. 3

Fig. 4

Fig. 5